# EUROPEAN PATENT APPLICATION

(11) **EP 2 602 358 A1**
(43) Date of publication of application: **12.06.2013**
(21) Application number: 11192761.2
(22) Date of filing: 09.12.2011
(51) Int. Cl.: C25B 1/06, C25B 9/06, C25B 15/08, F02B 43/10, F02M 25/12, F22B 1/00

(54) **An electrolysis cell**

(71) Applicant: Harvey, David, Co. Roscommon (IE)
(72) Inventor: Harvey, David, Co. Roscommon (IE)
(74) Representative: Purdylucey Intellectual Property

(57) **Abstract**

The invention provides an electrolysis cell and process for producing hydrogen from water comprising a housing adapted for storing water and adapted for receiving one or more conducting elements; a power supply means adapted for applying power to the conducting element; characterised by means for forming a gap between the level of the water and the top of the housing; and the conducting element is disposed in the housing and partially immersed in water such that part of the conducting element is exposed in said gap.

## Description

### Field of the Invention

The present invention relates to a fuel cell. In particular the invention relates to a fuel cell and process for the efficient electrolysis of water to create hydrogen oxygen gas.

### Background to the Invention

Fuel cells are well known devices and have been proposed for a long time. With the increase in fuel prices and scarcity of carbon based fuels has led to increased research in 'green' technologies. Hydrogen fuel cells provide an alternative or substitute for devices that run on hydrocarbon fuels. When water is decomposed into a hydrogen and oxygen gas the proportion is two parts hydrogen to one part oxygen. The process requires an anode and cathode and DC voltage which generates a current across the electrodes to produce gas. De-ionised water is used combined with an additive, known as electrolyte to provide sufficient electrical conductivity.

Problems associated with this process is poor gas production, overheating of the cell which can be caused by a number of factors, excess voltage, insufficient number of electrodes, increase in current draw resulting in overheating and contamination of electrolyte.

Electrodes immersed in an open bath arrangement or where electrolyte is allowed to pass between multiple electrodes result in current leakage and require excessive watts to operate and is therefore not an efficient process.

It is an object of the invention to provide a fuel cell, and process for operating same, to overcome at least one of the above mentioned problems.

### Summary of the Invention

According to the invention there is provided, as set out in the appended claims, a fuel cell for producing hydrogen from water comprising:
a housing adapted for storing water and adapted for receiving one or more conducting elements;
a power supply means adapted for applying power to the conducting element; characterised by:
   means for forming a gap between the level of the water and top of the housing; and
   the conducting element is disposed in the housing and partially immersed in water such that part of the conducting element is exposed in said gap.

In one embodiment the housing comprises an outlet positioned to cooperate with said gap.

In one embodiment the gap defines a zone for hydrogen collection and onward transmission through said outlet.

In one embodiment the power means is a DC supply and configured to deliver power at an optimum power to said conducting element. What the inventor discovered is that there is an optimum energy input for a given quantity of hydrogen/oxygen gas, any excess energy input will not produce more gas but will simply boil the water.

In one embodiment a catalyst is mixed with the water, said catalyst comprises potassium hydroxide.

In one the housing comprises one or more slots for receiving said conducting element.

In one embodiment the conducting element comprises a metal plate.

In one embodiment there is provided means for operating at a temperature of between 50 and 60 degrees Celsius, and preferably at 54 degrees Celsius.

In one embodiment said outlet cooperates with a separate storage tank comprising means for storing water.

In one embodiment said storage tank is positioned at a height above said housing, in use.

In one embodiment the storage tank comprises a storage inlet adjacent the bottom thereof for accommodating the hydrogen into the storage tank through the stored water, and an outlet above the level of water in the storage tank for onward transmission of the hydrogen.

In one embodiment there is provided a siphon means for said storage tank to transfer water automatically to said housing to refill said housing, when no power is being applied by said power means.

In one embodiment there is provided an apparatus for increasing the fuel efficiency of a heating boiler, the apparatus comprising a means for producing hydrogen using the fuel cell as hereinbefore described, and a means for introducing the hydrogen into the heating boiler.

In another embodiment there is provided an apparatus for increasing the fuel efficiency of an internal combustion engine, the apparatus comprising a means for producing hydrogen using the fuel cell as hereinbefore described, and a means for introducing the hydrogen into the internal combustion engine via an air intake to the engine.

In another embodiment of the invention there is provided a process for producing hydrogen comprising the steps of:
adapting a housing for storing water and for receiving one or more conducting elements;
applying power to the conducting element;
forming a gap between the level of the water and top of the housing;
disposing the conducting element in the housing and partially immersed in water such that part of the conducting element is exposed in said gap;
producing hydrogen in said gap and transmitting to a desired location.

In one embodiment there is provided an apparatus for increasing the fuel efficiency of an internal combustion engine, the apparatus comprising a means for producing hydrogen from water, and a means for introducing the hydrogen into the internal combustion engine via an air intake to the engine.

In one embodiment of the invention the means for producing hydrogen comprises a multi-electrode plate fuel cell in which the hydrogen is produced by electrolysis.

Preferably, the electrode plates are disposed in the fuel cell such that the operating voltage across adjacent electrode plates of the fuel cell lies in the range of 1.8 volts to 2.2 volts, and preferably, in the range of 2.1 volts to 2.2 volts, and ideally, the electrode plates are disposed in the fuel cell such that the operating voltage across adjacent electrode plates is in the order of 2.125 volts.

In one embodiment of the invention the electrode plates are spaced apart such that the distance between adjacent plates lies in the range of 1 mm to 3mm, and preferably, the spacing between adjacent plates lies in the range of 1.25mm to 2mm, and ideally, the spacing between adjacent electrode plates is in the order of 1.5mm.

Advantageously, the electrode plates define opposite major surfaces, and the area of each major surface lies in the range of 3000mm² to 30,000mm².

In another embodiment of the invention each electrode plate is of thickness in the range of 0.5mm to 1.5m, and advantageously, each electrode plate is of thickness of the order of 0.9mm.

Preferably, each electrode plate is of stainless steel, and advantageously, is of 316L grade stainless steel.

In one embodiment of the invention a catalyst is added to the water in the fuel cell, and preferably, the catalyst is potassium hydroxide.

In one embodiment of the invention the ratio of potassium hydroxide to water lies in the range of 12 millilitres potassium hydroxide to 1 litre water to 60 millilitres potassium hydroxide to 1 litre water, and preferably, the ratio of potassium hydroxide is 40 millilitres potassium hydroxide to 1 litre water.

Advantageously, the fuel cell comprises a container of heat resistant material, and preferably, of heat resistant material which is capable of withstanding temperatures of up to approximately 80°C.

Ideally, the hydrogen is fed from the fuel cell to the air intake of the internal combustion engine through a flush back arrester, which preferably is provided by a water barrier, and ideally, the hydrogen is bubbled through the water of the water barrier of the spark arrester.

In another embodiment of the invention the fuel cell is fed with water from a header tank, and preferably, the water in the header tank acts as the spark arrester. Ideally, the header tank comprises an inlet adjacent the bottom thereof for accommodating the hydrogen into the header tank through the water, and an outlet above the level of water in the header tank for accommodating the hydrogen therefrom to the air intake of the internal combustion engine.

In a further embodiment of the invention the hydrogen is introduced into the air intake of the internal combustion engine downstream of an air volume sensor in the air intake.

Preferably, oxygen produced during the production of hydrogen in the fuel cell by electrolysis is collected with the hydrogen to form oxyhydrogen gas and is introduced into the internal combustion engine via the air intake to the internal combustion engine.

The invention also provides an internal combustion engine comprising the apparatus according to the invention for increasing the fuel efficiency of the internal combustion engine.

The invention further provides a vehicle comprising an internal combustion engine and the apparatus according to the invention for increasing the fuel efficiency of the internal combustion engine.

Additionally, the invention provides a method for increasing the fuel efficiency of an internal combustion engine, the method comprising producing hydrogen from water, and introducing the hydrogen into the internal combustion engine via an air intake to the internal combustion engine.

Preferably, the hydrogen is produced in a multi-electroplate fuel cell by electrolysis, and preferably, the electrode plates are disposed in the fuel cell such that the operating voltage across adjacent electrode plates lies in the range of 1.8 volts to 2.2 volts, and preferably, lies in the range of 2 volts to 2.2 volts, and preferably, the electrode plates are disposed in the fuel cell such that the operating voltage across adjacent electrode plates is of the order of 2.125 volts.

In one embodiment of the invention a catalyst is added to the water in the fuel cell, and preferably, the catalyst is potassium hydroxide.

In another embodiment of the invention the hydrogen is collected with the oxygen from the electrolysis process to produce oxyhydrogen gas which is introduced into the internal combustion engine via the air intake thereof.

In one embodiment of the invention the internal combustion engine is adapted to run on diesel fuel, petrol or CNG.

In another embodiment of the invention, the oxyhydrogen gas is ingested at a rate in the order of 250 ml/minute per 1 000cc engine capacity.

### Brief Description of the Drawings

The invention will be more clearly understood from the following description of an embodiment thereof, which is given by way of example only, with reference to the accompanying drawings, in which:
Fig. 1 is a representation of a fuel cell according to one embodiment of the invention,
Fig. 2 is an alternative embodiment of the fuel cell of Fig. 1 designed for continuous operation, and
Fig. 3 is a block representation of an internal combustion engine according to the invention comprising apparatus which is also according to the invention for increasing the fuel efficiency of the internal combustion engine.

### Description of the Drawings

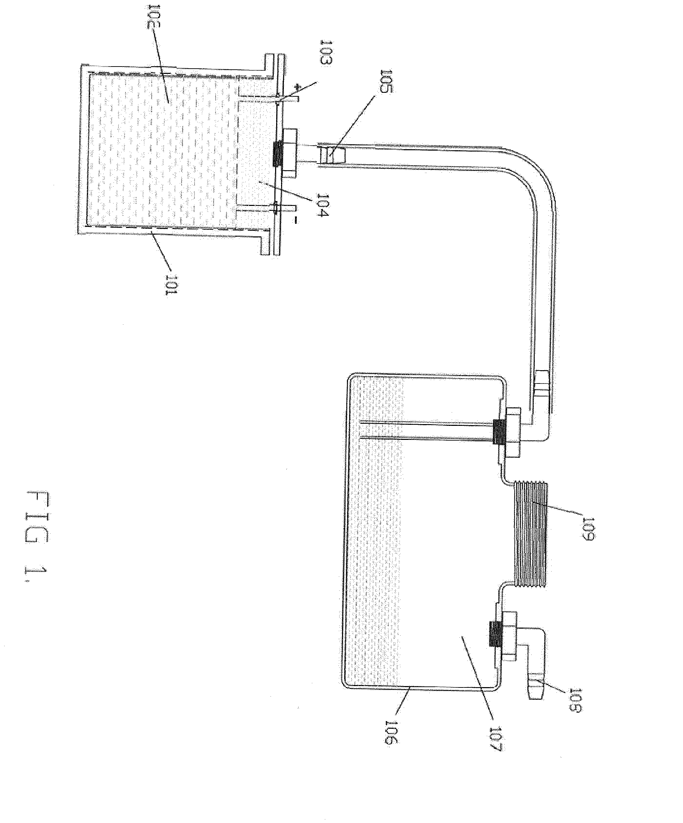

Referring now to the figures and initially Fig.1, Fig. 1 is a representation of a fuel cell system according to one embodiment of the invention indicated generally by the reference numeral 100.

The fuel cell comprises a housing 101 adapted for storing water (or electrolyte) and adapted for receiving one or more conducting elements 102. A power supply means 103 is adapted for applying power to at least one conducting element 102. The power supply means 103 can be a DC supply and configured to deliver power at an optimum power to said conducting element.

The housing 101 is dimensioned to allow a gap 104 between the level of the water and top of the housing. In use, at least one conducting element 102 is disposed in the housing and partially immersed in water such that part of the conducting element is exposed in the gap 104, the operation of which is described in more detail below.

The housing comprises an outlet 105 positioned to cooperate with the gap 104. The gap 104 defines a zone for hydrogen collection and onward transmission through the outlet 105.

The fuel cell design is a more efficient design resulting in improved efficiency for an optimum energy input. The housing 101 can be dimensioned as a rectangular box with a flanged top and cover plate. The receiving means are preferably in the form of slotted vertical inserts provided in the end gable walls and the electrodes fit tight into the slots. The top of the electrodes are preferably positioned 5mm below the top cover plate and the gas output fitting is located in the cover plate.

Initially when power is supplied to the electrode 102 gas accumulates in the top of the housing forcing water out through the outlet 105 and then the water (or electrolyte) level drops down below the electrode to expose the electrode in the gap 104. An important aspect of the invention is that there is considerably less scope for current leakage as the top edge of electrodes are disposed above the water level and in the gap 104 for optimum operation.

The partial exposing of the electrode in the gap increases the efficiency of the hydrogen generation. This is shown by the sudden reduction in current draw as the cell becomes active (9.4 to 5.8 amps) - see test results below.

Irrespective of the number of electrodes the space between electrodes become individual cells and current draw become stable as the electrolyte heats up to a continuous operation temperature of 54 deg C that provides a consistent gas volume output.

In one embodiment the electrodes used are 150x150x0.9mm 316L brush finished stainless steel and spaced at 1.5mm apart. One end electrode is the anode and the opposite end one is the cathode, intermediate electrodes remain neutral until the cell is powered by an external DC power supply and electrolyte. The cell efficiency test was carried out using a variable PSU ( power supply unit) 220v reduced to DC, variable voltage 24 to 27.5v dc and set to 25.5v for optimum operation. In the case of a truck engine a step down voltage regulator can be used to reduce charging voltage of 28.2v to 25.5v. For effective operation electrodes must be thoroughly cleaned, for example with isopropyl alcohol before assembly and with the use of clean latex gloves.

Fuel cell operation statistics from a cold start at 25.5 volt with current draw in amperage and gas output in litres per minute is shown below. It was surprisingly found that 12.8 amps (326 watts), or referenced as the 'sweet spot', provided the optimum energy input for a gas output of 120 litres/hour. It was found that any increase in energy input will not result in increased gas output, and therefore is a waste of energy.

### Test Results

| | CELL EFFICIENCY TEST | | |
|---|---|---|---|
| | Electrolyte mix 40ml/L | Voltage 25.5 | |
| Time | Current Draw (Amps) | | Gas Output |
| 11.45 | 5.8 | | ½ LPM |
| 12.00 | 6.4 | | ½ L/35 sec |
| 12.15 | | 7.0 | ½ L/32 sec |
| 12.30 | | 7.5 | 1 LPM |
| 12.45 | | 8.6 | 1.0 L/52 sec |
| 13.00 | | 10.0 | 1.5 L LPM |
| 13.15 | | 11.2 | 1.58 LPM |
| 13.30 | (sweet spot) | 12.8 | 2.00 LPM |
| 13.45 | | 12.9 | 2.00 LPM |
| 1.00 | | 13.1 | 2.00 LPM |
| | 5.44 watts /min for 2 litres (0.326kwh / 120 litres) | | |
| Electrolyte (Water) temp 54 Deg C. | | Gas output 368 Litres/kwh. | |

It will be appreciated multiple fuel cells can be connected in parallel for unlimited gas requirement and at a rate of 368 Litres/kwh.

It should be noted that advantageously no form of electronics are required to ensure a stable operation. However, where a fast warm up is required the use of 6% catalyst and a pulse width modulator can be used and must be configured to the optimum energy input of 12.8 amps. The catalyst can be a novel de-ionised water solution with 32% dilute form of Potassium Hydroxide and must be added to the water at a rate of 4% by volume, (40ml/L). A syringe can be used to ensure an accurate mix.

In one embodiment the housing is designed to accommodate up to fifteen electrodes for variable voltage applications.

The outlet 105 cooperates with a separate storage tank 106 and is adapted for storing water (or electrolyte). The gas is piped from the fuel cell 101 to the storage tank 106 and vents off from the top of the tank at gas outlet 108. The separate storage tank 106 is mounted at a height above the fuel cell 101. In use, the storage tank is positioned at a height above the housing 101 to provide a siphon means for the storage tank 106 to transfer water 107 automatically to the housing 101 to refill the housing 101, when no power is being applied by the power means. In other words, when the fuel cell is powered off and begins to cool the remainder of gas rises through the pipe and the cell is replenished with electrolyte by a siphon method. The storage tanks 106 can be refilled as required through opening 109.

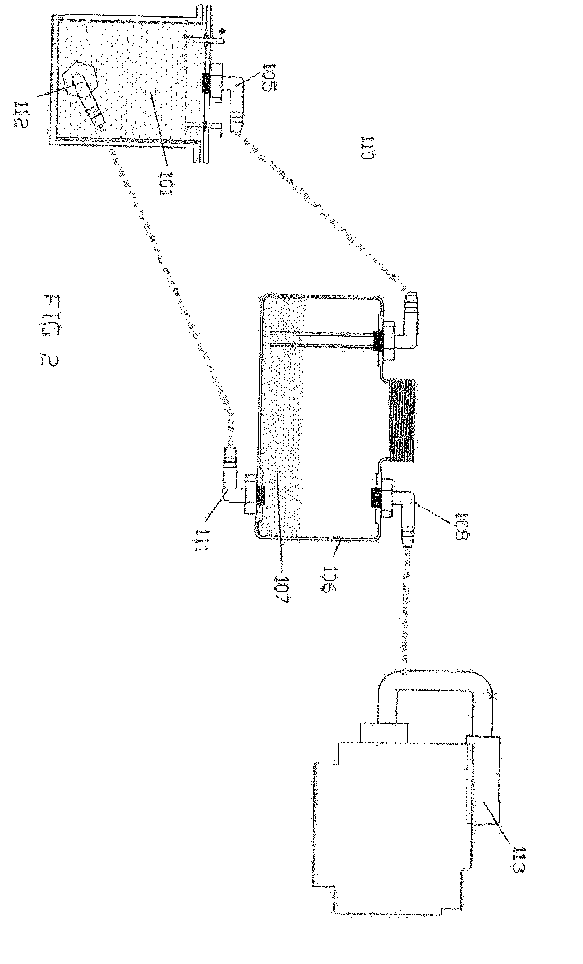

Another embodiment of the invention is shown in Fig. 2 where continuous fuel cell operation is required, indicated generally by the reference numeral 110. The fuel cell works in the same way as the fuel cell described in Fig. 1, however continuous operation can be achieved by having a separate outlet 111 from the storage tank 106 to supply electrolyte or water to the fuel cell 101 via fuel cell inlet 112 in a continuous fashion. In this way power from the power supply can be applied without interruption and the electrolyte or water is replenished to the fuel cell 101, as required. The oxy-hydrogen gas produced can be delivered to a system 113, such as a vehicle engine or a boiler, that uses a hydrocarbon fuel to operate. This is shown in Fig. 2 where gas is delivered from outlet 108 to the system 113 to increase the performance and/or efficiency of the system 113.

In one embodiment it will be appreciated that the invention can be used for increasing the fuel efficiency of a heating boiler, the apparatus comprising a means for producing hydrogen using the fuel cell of Fig. 1 or Fig. 2, and a means for introducing the hydrogen into the heating boiler. For example, the fuel cell was tested on Firebird Kerosene Boiler Model 000282 150,000btu (see www.firebird.ie) and the test equipment used was a Kane 425 flue gas analyzer.

### Results

| Fuel L - Oil | | |
|---|---|---|
| Kerosene Only | | (Hydrogen added, 0.5 Litre/min @ 7 amps) |
| Stat setting 70 Deg C | | 70 |
| 02 % | 5.4 | 3.8 |
| Co2 % | 11.5 | 12.4 |
| CO PPM % | 08 | 18 |
| Flue Deg C | 247.7 | 189.6 |
| Inlet deg C | 17.2 | 11.8 |
| Nett deg C | 230.5 | 177.8 |
| EFF (C) | 89.8 | 92.8 |
| Losses | 10.2 | 7.2 |
| XAIR % | 34.8 | 22.9 |
| Co/co2 | 0.0000 | 0.0001 |
| PRS mbar | - 0.01 | 0.00 |
| The above test results show improved efficiency. | | |
| Flue gas temp reduction 22.8% | | |
| Losses reduced by 29.42% | | |

From preliminary tests, with improved efficiency the average home would use a fill of oil less per heating season.

A further test was carried out by heating a 200L buffer tank which resulted in a 20% faster heat up cycle.

In one embodiment it will be appreciated that the invention can be used for increasing the fuel efficiency of a waste incinerator, oil and gas boilers, CHP power generation, turbine engines, smoke emissions reduction to fossil fuel fires, heat accumulation via alumina ceramic catalyst for optimum energy transfer and including desalination, 24/7 power generation by means of the gas flame on alumina ceramic to illuminate a PV array and a hydrogen fired heating boiler, the apparatus comprising a means for producing hydrogen using the fuel cell of Fig. 1 or Fig. 2, and a means for introducing the hydrogen into the waste incinerator.

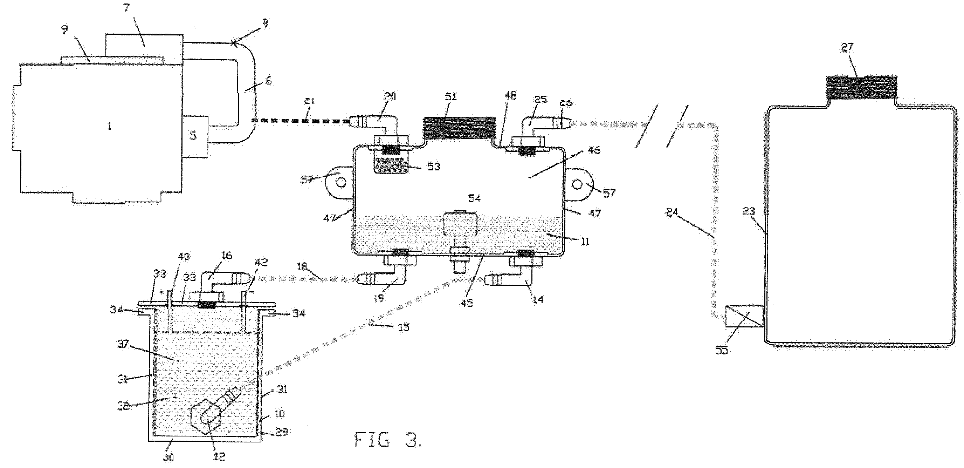

In one embodiment it will be appreciated that the invention can be used for increasing the fuel efficiency of an internal combustion engine. Hydrogen produced using the fuel cell of Fig. 1 or Fig. 2, can be delivered to the internal combustion engine via an air intake to the engine. In more detail Fig. 3 illustrates an internal combustion engine 1 using the fuel cell of Fig's.1 or 2. The internal combustion engine 1 is illustrated only in Fig. 3 and is illustrated in block representation. The internal combustion engine in this embodiment of the invention is adapted to run on diesel fuel, and is turbo charged by a turbo charger 5 located in an air intake manifold 6 through which air is drawn into the internal combustion engine 1. An air filter 7 filters air being drawn into the air intake manifold 6, and an air volume sensor 8 monitors the volume of air being drawn into the internal combustion engine 1 through the air intake manifold 6. A plurality of injectors 9 are provided on the internal combustion engine 1, through which diesel fuel is injected into the internal combustion engine 1.

The apparatus 2 according to the invention produces an oxyhydrogen gas from water by electrolysis, and the oxyhydrogen gas is introduced into the internal combustion engine 1 through the air intake manifold 6 at a location downstream of the air volume sensor 8 and upstream of the turbo charger 5. The oxyhydrogen gas is introduced into the manifold 6 downstream of the sensor 8 so that the introduction of the oxyhydrogen gas has no effect on the air volume being monitored by the sensor 8.

The apparatus 2 comprises a fuel cell generator 10 within which the oxyhydrogen gas is produced from water which includes a catalyst for increasing the conductivity of the water. In this embodiment of the invention the catalyst is potassium hydroxide. The water/potassium hydroxide mixture is stored in a header tank 11, and is fed into the fuel cell generator 10 through a water inlet 12 from a header tank 11. A water outlet 14 from the header tank 11 delivers the water/potassium hydroxide mixture through a pipe 15 to the water inlet 12. An outlet port 16 from the fuel cell 10 accommodates the oxyhydrogen gas which is generated in the fuel cell generator 10 from the fuel cell generator 10 through a transfer pipe 18 to an inlet port 19 in the header tank 11, so that the oxyhydrogen gas is bubbled through water in the header tank 11. The oxyhydrogen gas is delivered through a gas outlet port 20 in the header tank 11 via a delivery pipe 21 to the air intake manifold 6. The water in the header tank 11 acts as a spark arrester to act as a barrier to flashback and backfires from the engine. A supply tank 23 stores and supplies the water/potassium hydroxide mixture to the header tank 11 through a water supply pipe 24 and a non-return valve 25 located in a water inlet port 26 to the header tank 11. An inlet port 27 to the supply tank 23 is closed by a closure cap (not shown).

Returning now to the fuel cell generator 10, in this embodiment of the invention the fuel cell generator 10 comprises a container 29 of a high temperature plastics material which is capable of withstanding temperatures up to 120°C, which comprises a base 30, a pair of spaced apart parallel side walls 31 extending upwardly from the base 30, and a pair of spaced apart parallel end walls 32 also extending upwardly from the base 30 and joining the side walls 31. A lid 33 is sealably secured to flanges 34 which extend outwardly from the side and end walls 31 and 32 and completely around the container 29. The base 30, the side walls 31 and 32 and the lid 33 together define a hollow interior region 35. The water inlet 12 is sealably located in one of the end walls 32, while the outlet port 16 is sealably located in the lid 33.

In this embodiment of the invention the fuel cell generator 10 is adapted to be powered by a 12 volt battery and comprises seven spaced apart parallel electrode plates 37 which are located within the hollow interior region 35 parallel to the end walls 32 and spaced apart therefrom. Spaced apart slots 38 in the side walls 31 receive the electrode plates 37 and retain the electrode plates 37 spaced apart from each other. Alternate ones of the electrode plates 37 are electrically coupled together and are coupled to a positive electrode 40 which extends through the lid 33. The remaining alternate electrode plates 37 are also electrically coupled together and are electrically coupled to a negative electrode 42, which also extends through the lid 33. The positive and negative electrodes 40 and 42 are sealably secured and mutually electrically insulated in the lid 33. The 14.25 charging voltage power supply is connected across the positive and negative electrodes 40 and 42.

Each electrode plate 37 is of 316L grade stainless steel material of 0.9mm thickness. Each electrode plate 37 is of length 150mm by 150mm in height, and thus opposite major surfaces of the electrode plates 37 are each of area of 22,500mm². The slots 38 space the electrode plates 37 apart a distance of 1.5mm. By providing the electrode plates of 316L grade stainless steel, of the area discussed above and spaced apart 1mm from each other, the operating voltage applied across adjacent electrode plates 37 is 2.035 volts during generation of the oxyhydrogen gas, and this has been found to efficiently produce the oxyhydrogen gas.

The header tank 11 is also of plastics material and comprises a base 45, a pair of upstanding spaced apart side walls and upstanding end walls 47 extending upwardly from the base 45 and joining the side walls. A top wall 48 extends between the side and end walls 46 and 47 and defines with the side and end walls 47 and the base 45 a hollow interior region 46. The water outlet port 14 and the gas inlet port 19 are sealably located in the base 45 of the header tank 12, while the water inlet port 26 and the gas outlet port 20 are sealably located in the top wall 48. A cap (not shown) sealably closes an access port 51 to the hollow interior region 46 of the header tank 11. A water stop 53 secured to the top wall extends around the gas outlet port 20 for preventing water being carried through the gas outlet port 20.

A float operated switch 54 mounted on the base 45 of the header tank 12 is responsive to the level of water in the header tank 12 falling below a predefined lower level for activating a pump 55 in the water supply pipe 24 for pumping water from the water supply tank 23 to the header tank 11. The float switch 54 is also responsive to the level of water in the header tank 11 rising above a predefined upper level for deactivating the pump 55.

Brackets 57 are provided for securing the header tank 11 to a bulkhead in the engine compartment of a motor vehicle in which the apparatus 2 is located with the header tank 11 located at a level above the fuel cell generator 10.

In use, with the apparatus 2 located in the engine compartment of a motor vehicle and with the delivery pipe 21 coupled to the air intake manifold 6 for delivering the oxyhydrogen gas into the air intake manifold 6, the internal combustion engine 1 and the apparatus 2 are ready for use. A 14.25 volt supply for charging the 12 volt battery of the motor vehicle is coupled to the positive and negative electrodes 40 and 42 of the fuel cell generator 10, and the water supply tank 23 is topped up with the water/potassium hydroxide mixture, and the closure cap (not shown) is secured to the inlet port 27.

On activation of the ignition of the internal combustion 1, the 14.25 volt supply from the charging battery (not shown) of the motor vehicle is applied to the positive and negative electrodes 40 and 42, and generation of the oxyhydrogen gas by electrolysis commences. The oxyhydrogen gas is delivered from the fuel gas generator 10 through the header tank 11, and in turn is introduced into the air intake manifold 6. The presence of the oxyhydrogen gas in the combustion chamber of the internal combustion engine along with the diesel fuel results in the diesel fuel being burnt at a higher temperature, and thereby ensuring better combustion of the diesel fuel, which in turn significantly increases the efficiency of operation of the internal combustion engine and reduces emissions of undesirable gases from the internal combustion engine. The oxyhydrogen gas on being burnt merely reverts to water.

Tests have been carried out on a Mercedes car with a diesel powered 2148cc litre internal combustion engine, and it has been found that by producing the oxyhydrogen gas from a water/potassium hydroxide mixture of 12 millilitres of potassium hydroxide to 1 litre of water and with the voltage across adjacent ones of the electrode plates 37 at 2.035 volts, the oxyhydrogen gas was ingested at the rate of 537 ml per minute, and the diesel consumption of the motor vehicle fell to 3.9 litres per 100km of open road driving from 5 litres per 100km of open road driving. The diesel consumption in urban driving fell dramatically to 5 to 5.5 litres per 100km of urban road driving from 9.1 to 9.2 litres per 100km of urban road driving, with a similar oxyhydrogen gas ingestion rate. Additionally, it has been found that with the water/potassium hydroxide mixture of 12 millilitres potassium hydroxide to 1 litre water, the carbon dioxide emission of the internal combustion engine 1 when fitted with the apparatus 2 dropped by 9.6kg carbon dioxide per 100km of urban driving.

The oxyhydrogen gas results in the diesel combusting at a higher temperature, thereby improving the thermodynamic efficiency of combustion of the diesel fuel. However, the oxyhydrogen gas when it reverts to water avoids excessive rises in temperature in the combustion chambers of the internal combustion engine.

In this embodiment of the invention the water/potassium hydroxide mixture comprises 12 millilitres of potassium hydroxide to 1 litre of water. This ratio of potassium hydroxide to water significantly increases the production of the oxyhydrogen gas and thereby increases the fuel efficiency of the internal combustion engine 1. However, as discussed above, it has been found that by providing a water/potassium hydroxide mixture of 12 millilitres of potassium hydroxide to 1 litre of water, a good improvement in the efficiency of the internal combustion engine has been found.

It has also been found that by using a 12 millilitres of potassium hydroxide to 1 litre of water mixture, the fuel cell generator 10 initially is reduce to 8 amps, which as the water commences to heat, increases to 10 amps. However, when the temperature of the water/potassium hydroxide mixture reaches 50 °C, the current drawn by the fuel cell generator 10 is reduced to 8 amps. This results in an increase in the production of oxyhydrogen gas with water vapour which has a latent cooling effect on combustion, and which in turn has been found to lead to a further increase in the efficiency of the internal combustion engine 1 with reduction in emissions and improved performance.

In the specification the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiment hereinbefore described, which may be varied in construction and detail.

## Claims

1. A fuel cell for producing hydrogen from water comprising:
a housing adapted for storing water and adapted for receiving one or more conducting elements;
a power supply means adapted for applying power to the conducting element; **characterised by**:
means for forming a gap between the level of the water and top of the housing; and
the conducting element is disposed in the housing and partially immersed in water such that part of the conducting element is exposed in said gap.

2. The fuel cell as claimed in claim 1 wherein the housing comprises an outlet positioned to cooperate with said gap.

3. The fuel cell as claimed in claims 2 wherein the gap defines a zone for hydrogen collection and onward transmission through said outlet.

4. The fuel cell as claimed in any preceding claim wherein the power means is a DC supply and configured to deliver power at an optimum power to said conducting element.

5. The fuel cell as claimed in any preceding claim wherein a catalyst is mixed with the water, said catalyst comprises potassium hydroxide.

6. The fuel cell as claimed in any preceding claim wherein the housing comprises one or more slots for receiving said conducting element.

7. The fuel cell as claimed in any preceding claim wherein the conducting element comprises a metal plate.

8. The fuel cell as claimed in any preceding claim comprising means for operating at a temperature of between 50 and 60 degrees Celsius, and preferably at 54 degrees Celsius.

9. The fuel cell as claimed in any preceding claim wherein said outlet cooperates with a separate storage tank comprising means for storing water.

10. The fuel cell as claimed in claims 9 wherein, in use, said storage tank is positioned at a height above said housing.

11. The fuel cell as claimed in claims 9 or 10 wherein the storage tank comprises a storage inlet adjacent the bottom thereof for accommodating the hydrogen into the storage tank through the stored water, and an outlet above the level of water in the storage tank for onward transmission of the hydrogen.

12. The fuel cell as claimed in claims 9 to 11 comprising siphon means for said storage tank to transfer water automatically to said housing to refill said housing, when no power is being applied by said power means.

13. Apparatus for increasing the fuel efficiency of a heating boiler, the apparatus comprising a means for producing hydrogen using the fuel cell of any preceding claim, and a means for introducing the hydrogen into the heating boiler.

14. Apparatus for increasing the fuel efficiency of an internal combustion engine, the apparatus comprising a means for producing hydrogen using the fuel cell of any preceding claim, and a means for introducing the hydrogen into the internal combustion engine via an air intake to the engine.

15. A process for producing hydrogen comprising the steps of:
adapting a housing for storing water and for receiving one or
more conducting elements;
applying power to the conducting element;
forming a gap between the level of the water and top of the housing;
disposing the conducting element in the housing and partially immersed in water such that part of the conducting element is exposed in said gap; and
producing hydrogen in said gap and delivering to a desired location.
